## Europäisches Patentamt

## European Patent Office

## Office européen des brevets

(11) Veröffentlichungsnummer: **0 310 665**

**A1**

(12) **EUROPÄISCHE PATENTANMELDUNG**

Veröffentlicht nach Art. 158 Abs. 3 EPÜ

(21) Anmeldenummer: **86904466.9**

(22) Anmeldetag: **30.04.86**

(51) Int. Cl.³: **B 23 K 7/06**

Daten der zugrundeliegenden internationalen Anmeldung:

(86) Internationale Anmeldenummer:
**PCT/SU86/00038**

(87) Internationale Veröffentlichungsnummer:
**WO87/06511 (05.11.87 87/24)**

(43) Veröffentlichungstag der Anmeldung:
**12.04.89 Patentblatt 89/15** *

(84) Benannte Vertragsstaaten:
**DE FR GB IT SE**

(71) Anmelder: **KHARKOVSKY AVIATSIONNY INST. IMENI N.E. ZHUKOVSKOGO**
**ul. Chkalova, 17**
**Kharkov, 310191(SU)**

(72) Erfinder: **BOZHKO, Valery Pavlovich**
**ul. Chkalova, 13-56**
**Kharkov, 310084(SU)**

(72) Erfinder: **LOSEV, Alexei Vasilievich**
**Saltovskoe shosse, 240a-11**
**Kharkov, 310171(SU)**

(72) Erfinder: **PLESHKOV, Viktor Ivanovich**
**ul. Gvardeitsev Shironintsev, 26-204**
**Kharkov, 310120(SU)**

(72) Erfinder: **STRIZHENKO, Vitaly Evgenievich**
**ul. Osnovyanskaya, 56**
**Kharkov, 310010(SU)**

(72) Erfinder: **LEVITYANSKY, Ivan Anisimovich**
**ul. Volodarskogo, 34-73 Leningradskaya obl.**
**Gatchina, 188350(SU)**

(74) Vertreter: **Finck, Dieter et al,**
**Patentanwälte v. Füner, Ebbinghaus, Finck Mariahilfplatz 2 & 3**
**D-8000 München 90(DE)**

(54) **EINRICHTUNG ZUM THERMISCHEN ENTGRATEN VON STÜCKEN.**

(57) Die vorrichtung enthält eine zylindrische Arbeitskammer (2) mit einem Aufnahmeboden (7), die mit einem Einlaß- – und einem Auslaßventil (3, 5) und einer Zündkerze (4) ausgerüstet ist. Der Aufnahmeboden (7) ist in Form eines Hohlzylinders mit Deckeln an den Stirnflächen und Fenstern (8) ausgebildet dessen Höhe und Außendurchmesser etwa der Höhe und dem Innendurchmesser der Arbeitskammer (2) gleicht. Zwischen der Kammer (2) und dem Hohlzylinder befinden sich Dichtungsringe (11, 12).

FIG.1

EP 0 310 665 A1

EPAC-35810.1

VORRICHTUNG ZUM THERMISCHEN ENTGRATEN VON WERKSTÜCKEN
## Gebiet der Technik

Die Erfindung bezieht sich auf den Maschinenbau, und zwar auf die Behandlung von Werkstoffen und Werkstücken im Medium erhitzter, chemisch aktiver Gase zum Zweck des Flämmens von Oberflächenfehlern und betrifft Vorrichtungen zum thermischen Entgraten von Werkstücken.

## Zugrundeliegender Stand der Technik

Es ist eine Vorrichtung zum thermischen Entgraten von Werkstücken bekannt, die einen C-förmigen Rahmen mit einer Arbeitskammer und einen Tisch mit Aufnahmen für die Werkstükke enthält, die nacheinander die Beschickungsöffnung der Arbeitskammer hermetisch verschließen (siehe US-Patentschrift Nr. 3666252, N. Kl. 266-2, bekanntgemacht 1972). Diese Vorrichtung ist mit leistungsstarken Hydraulikzylindern und einem Hebelmechanismus zum Fixieren der Aufnahme in der Beschickungsöffnung der Kammer in der Brennperiode des Brennstoffgemisches versehen.

Die Konstruktion dieser Hebelmechanismen zum Fixieren ist durch eine hohe Steifigkeit und einen hohen Metallbedarf gekennzeichnet, da ihre Einzelteile hohe Impulsbelastungen aufnehmen müssen ohne sich elastisch zu deformieren, um einen zuverlässigen hermetischen Verschluß der Kammer zu gewährleisten. Aus diesem Grund besitzt die bekannte Vorrichtung einen starken und steifen Rahmen.

Dabei verringert die Anwendung von Hebelmechanismen zum Fixieren die Leistung, da das Ansprechen dieser Mechanismen eine gewisse Zeit zum Fixieren und Lösen der Aufnahmen erfordert.

Nach Beendigung der Behandlung der Werkstücke setzt ein hydraulischer Antrieb den Hebelmechanismus in Bewegung, der die Aufnahme herabsetzt. Durch die entstandene Öffnung vollzieht sich der Auspuff der Verbrennungsprodukte, die unter hohem Druck und hoher Temperatur stehen und unmittelbar auf die hermetisch schließende Teflondichtung einwirken, was zu deren raschen Verschleiß führt.

Es ist auch eine Vorrichtung zum thermischen Entgraten von Werkstücken bekannt, die eine zylindrische Arbeitskammer mit Einlaß- und Auslaßventilen und einer Zündkerze, einen

- 2 -

Aufnahmeboden zum Schließen und Öffnen der Beschickungsöffnung der Kammer, der einen Tisch zum Aufstellen der zu behandelnden Werkstücke hat und bewegbar entlang der Achse der Kammer angeordnet ist, und einen elastischen Dichtungsring zur Herstellung einer hermetischen Verbindung des Aufnahmebodens mit der Kammer enthält (siehe SU-Urheberscheinschrift Nr. 9d8499, IPK B 23 K 28/00, bekanntgemacht 1983).

Diese Vorrichtung gewährleistet jedoch nicht eine ausreichend hohe Leistung und Zuverlässigkeit des Betriebs, da ein zuverlässiges Fixieren des Aufnahmebodens an der Kammer zum Verhindern eines Ausstoßens des Aufnahmebodens beim Füllen und Zünden des Brennstoffgemisches gesichert werden muß. Zu diesem Zweck wird in der bekannten Vorrichtung eine Drehbuchse verwendet, die mit dem Aufnahmeboden einen Bajonettverschluß bildet, dessen Elemente die maximalen technologiebedingte Kräfte aufnehmen, d.h. auf sie wirkt eine Kraft ein, die durch den maximalen Druck der Verbrennungsprodukte des Gemisches bestimmt wird. Durch die Verwendung einer Drehbuchse und eines Antriebs für deren Drehung wird der Metallbedarf der Konstruktion erhöht. Das häufige Belasten der Elemente des Bajonettverschlusses führt zu deren Deformierung und raschen Verschleiß, was die Zuverlässigkeit der Vorrichtung verringert. Die Notwendigkeit eines Drehens der Buchse nach dem Anheben des Aufnahmebodens zum Zweck der Bildung eines Bajonettverschlusses und eines Zurückdrehens der Buchse zum Lösen des Aufnahmebodens nach der Behandlung der Werkstücke verlängert den Betriebszyklus und begrenzt die Leistung. Außerdem ist die Vorrichtung ungenügend zuverlässig im Betrieb, da die unmittelbare Einwirkung eines hohen Drucks und einer hohen Temperatur der Verbrennungsprodukte auf den zwischen der Arbeitskammer und dem Aufnahmeboden gelegenen elastischen Dichtungsring nicht vermieden werden kann.

Das hermetische Verschließen der Arbeitskammer mit Hilfe eines elastischen Dichtungsrings ist uneffektiv: unter Einwirkung des beim Brennen des Gas-Bauerstoff-Gemisches entstehenden hohen Drucks und der dabei auftretenden hohen Drucks und der dabei auftretenden hohen Temperatur wird der unmittelbar mit dem Gemisch in Berührung stehende Ring schnell

- 3 -

zerstört, es kommt zum Durchbrennen, zum Durchbruch der Gase u. drgl. Das alles vermindert die Zuverlässigkeit und die Betriebssicherheit der Vorrichtung. Außerdem wird ihre Leistung durch den für das Fixieren und Lösen des Aufnahmebodens notwendigen Zeitaufwand verringert.

## Offenbarung der Erfindung

Der Erfindung liegt die Aufgabe zugrunde, die Konstruktion einer Vorrichtung zum thermischen Entgraten von Werkstücken so zu vervollkommnen, daß eine zuverlässige hermetische Verbindung des Aufnahmebodens mit der Arbeitskammer während des Brennens des Brennstoffgemisches ohne Anwendung von Kraftmechanismen zur Herstellung der Verbindung und zum Fixieren gewährleistet und dabei die unmittelbare Einwirkung der Verbrennungsprodukte auf die hermetisch verschließende Dichtung vermieden wird.

Diese Aufgabe wird dadurch gelöst, daß in einer Vorrichtung zum thermischen Entgraten von Werkstücken, die eine zylindrische Arbeitskammer mit einem Einlaß- und einem Auslaßventil und einer Zündkerze, einen Aufnahmeboden zum Schließen und Öffnen der Beschickungsöffnung der Kammer, der mit einem Tisch zum Aufstellen der zu behandelnden Werkstücke ausgerüstet und bewegbar entlang der Achse der Kammer angeordnet ist, und einen elastischen Dichtungsring zur hermetischen Abdichtung der Verbindung des Aufnahmebodens mit der Kammer enthält, gemäß der Erfindung der Aufnahmeboden in Form eines Hohlzylinders mit Deckeln an den Stirnflächen und Fenstern in der Seitenwand ausgebildet ist, dessen Höhe und Außendurchmesser etwa der Höhe und dem Innendurchmesser der Arbeitskammer gleicht, und die Vorrichtung mit einem zusätzlichen Dichtungsring versehen ist, der sich zwischen der Kammer und dem Hohlzylinder auf der der Beschickungsöffnung der Kammer gegenüberliegenden Seite befindet.

Es ist zweckmäßig, die Vorrichtung wenigstens mit einem zusammengesetzten metallischen Dichtungsring, der zwischen der Kammer und dem Hohlzylinder auf der Seite der Beschickungsöffnung der Kammer hinter dem elastischen Dichtungsring in Richtung vom Rand der Kammer weg zur Mitte hin entlang ihrer Achse liegt, und einem Sicherungsring für den er-

- 4 -

wähnten zusammengesetzten Ring zu versehen, der auf der Oberfläche des Hohlzylinders bei der Bewegung des letzteren gleiten kann, wobei als zusätzlicher Dichtungsring wenigstens ein zusammengesetzter Metallring verwendet werden muß.

Die erfindungsgemäße Vorrichtung zum thermischen Entgraten von Werkstücken ist nach einem in sich geschlossenen Kräfteschema ausgeführt, d.h. sie erfordert keinerlei Zusatzmechanismen zum Fixieren des Aufnahmebodens an der Kammer, wodurch ihre Zuverlässigkeit erhöht und der Metallbedarf um 15 bis 20 % verringert wird. Die Zuverlässigkeit und die Betriebssicherheit der Vorrichtung steigt auch durch Anbringen metallischer Dichtungsringe auf dem Aufnahmeboden, die eine unmittelbare Einwirkung der heißen Gase auf den elastischen Dichtungsring verhindern.

Da im Betriebszyklus der Vorrichtung der Arbeitsgang des Fixierens und des Lösens des Aufnahmebodens fehlt, steigt ihre Leistung um 10 bis 15 %.

Kurze Beschreibung der Zeichnungen

Im folgenden wird die Erfindung durch die Beschreibung konkreter Ausführungsvarianten und die beiliegenden Zeichnungen erläutert, und zwar zeigt:

Fig. 1 eine erfindungsgemäße Vorrichtung zum thermischen Entgraten von Werkstücken in der Betriebsstellung im Längsschnitt;

Fig. 2 wie Fig. 1, in der Ausgangsstellung;

Fig. 3 eine Ansicht in der Pfeilrichtung A in Fig. 2;

Fig. 4 eine Variante der gleichen Vorrichtung wie in Fig. 1, 2 mit zusammengesetzten Metallringen in der Betriebsstellung im Längsschnitt;

Fig. 5 wie in Fig. 4, in der Ausgangsstellung.

Beste Ausführungsvariante der Erfindung

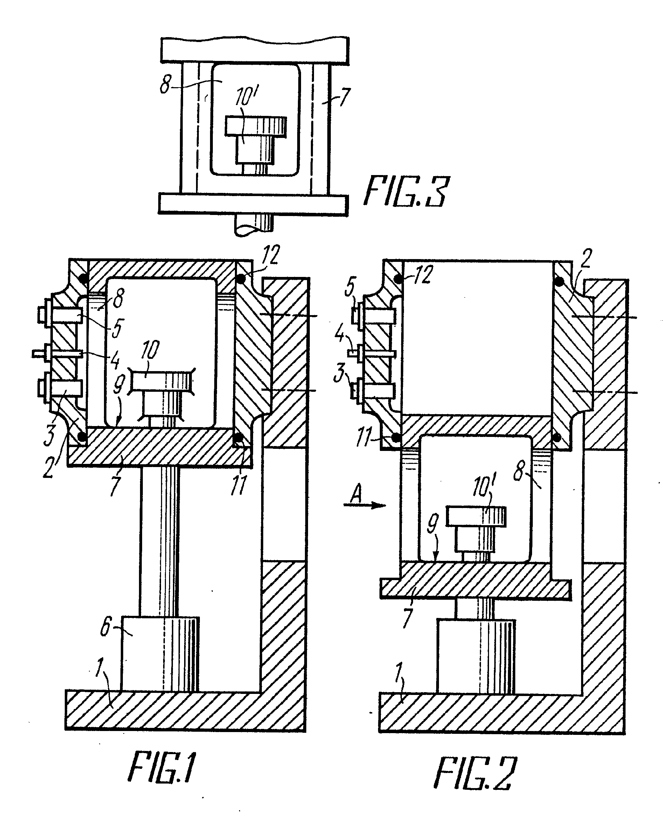

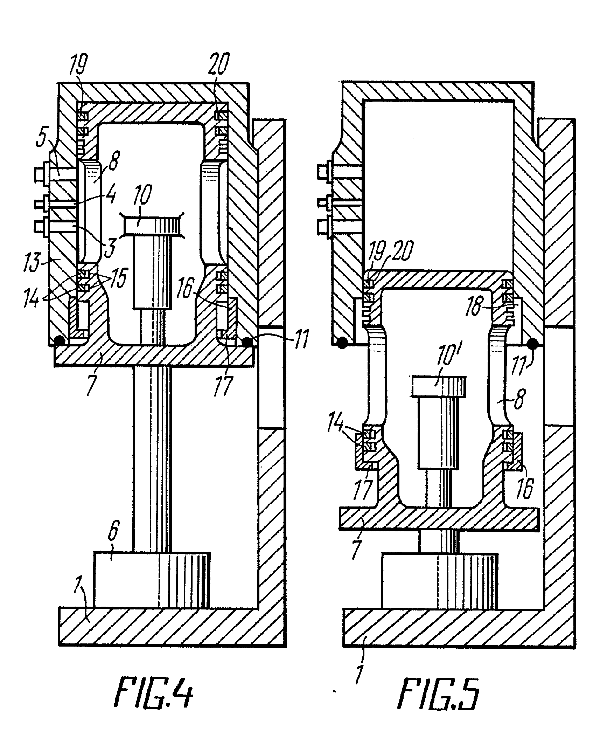

Die in Fig. 1, 2, 3 abgebildete Vorrichtung zum thermischen Entgraten von Werkstücken enthält einen unbeweglichen Rahmen 1, an dem eine Arbeitskammer 2 mit einem in ihre Wand eingebauten Einlaßventil 3, einer Zündkerze 4 und einem Auslaßventil 5 starr befestigt ist. Die Kammer 2 ist in Form eines beidseitig offenen Zylinders ausgebildet, wobei die untere (entsprechend der Zeichnung) Öffnung der Kammer 2 eine

- 5 -

Beschickungsöffnung darstellt. Am gleichen Rahmen 1 ist ein pneumatischer Zylinder 6 befestigt, auf dessen beweglichem Element ein Aufnahmeboden 7 zum Schließen und Öffnen der Kammer 2 angebracht ist, der in Form eines Hohlzylinders mit Deckeln auf den Stirnflächen und Fenstern 8 in der Seitenwand ausgebildet ist, dessen Höhe und Außendurchmesser etwa der Höhe und dem Innendurchmesser der Arbeitskammer 2 gleicht. Die Innenfläche des unteren (entsprechend den Zeichnungen) Deckels der Stirnfläche des Aufnahmebodens 7 übt die Funktion eines Tisches 9 zum Aufstellen und Abnehmen der zu behandelnden Werkstücke 10, $10^1$ durch das Fenster 8 aus. Der Aufnahmeboden 7 kann sich entlang der Achse der Kammer 2 bewegen. Zwischen der Kammer 2 und dem Aufnahmeboden 7 befindet sich auf der Seite der Beschickungsöffnung der Kammer 2 ein elastischer Dichtungsring 11 und auf der der Beschickungsöffnung gegenüberliegenden Seite ein zusätzlicher Dichtungsring 12. Die Dichtungsringe 11 und 12 können aus einem beliebigen, für Dichtungszwecke geeigneten Material angefertigt werden, z.B. aus Gummi oder Teflon.

In der in Fig. 4, 5 abgebildeten Variante der Vorrichtung zum thermischen Entgraten von Werkstücken ist im Unterschied zu der in Fig. 1, 2, 3 gezeigten Variante dieser Vorrichtung die Kammer 13 oben geschlossen (in Fig. 4, 5), und zwischen ihr und dem Aufnahmeboden 7 ist von seiten ihrer Beschickungsöffnung hinter dem elastischen Dichtungsring 11 in Richtung vom Rand der Kammer 13 weg zur Mitte hin entlang ihrer Achse wenigstens ein, in der beschriebenen Variante zwei zusammengesetzte Metallringe 14 angebracht, für die im Hohlzylinder (im Aufnahmeboden 7) ringförmige Rillen 15 ausgeführt sind. Zur Fixierung der zusammengesetzten Ringe 14 bei der Bewegung des Aufnahmebodens 7 hat die Vorrichtung gemäß der Erfindung einen Sicherungsring 16 mit einem Bördelrand 17, der sich in einer Innenaussparung 18 der Kammer 13 befindet und auf der Oberfläche des Hohlzylinders gleiten kann. Außerdem sind in dieser Variante der Vorrichtung anstelle eines zusätzlichen Dichtungsrings zwei zusammengesetzte Metallringe 19 in ringförmigen, am oberen (entsprechend Fig. 4, 5) Ende des Hohlzylinders ausgeführten

- 6 -

Rillen 20 angebracht.

Die Vorrichtung zum thermischen Entgraten von Werkstücken funktioniert folgendermaßen.

In der Ausgangsstellung befindet sich der Aufnahmeboden 7 (Fig. 1, 2, 3) in der unteren Lage, wie in Fig. 2 abgebildet. Durch das Fenster 8 wird auf den Tisch 9 ein zu behandelndes Werkstück 10 (oder mehrere Werkstücke) gestellt. Danach wird der Aufnahmeboden 7 mit dem Werkstück 10 mit Hilfe des pneumatischen Zylinders 6 an der Innenwand der Arbeitskammer 2 entlang angehoben und nimmt die Betriebsstellung ein, so wie in Fig. 1 gezeigt. Dabei gewährleisten die elastischen Dichtungsringe 11 und 12 einen hermetischen Verschluß des Innenraums der Arbeitskammer 2, der von den Seitenwänden der Arbeitskammer 2 und des Hohlzylinders und den Deckeln an den Stirnflächen des Hohlzylinders (des Aufnahmebodens 7)gebildet wird.

Nach dem hermetischen Verschluß der Arbeitskammer 2 wird in ihren Innenraum durch das Fenster 8 und das Einlaßventil 3 ein Brennstoffgemisch geleitet, das dann mit Hilfe der Zündkerze 4 gezündet wird.

Durch das schnelle Ansteigen des Drucks und der Temperatur im Raum der Kammer 2 werden die Grate auf dem zu behandlnden Werkstück 10 infolge ihrer entwickelten Oberfläche und einer relativkleinen Masse verbrannt und/oder abgeschmolzen.

Nach dem Öffnen des Auslaßventils 5 entweichen die Verbrennungsprodukte aus dem Innenraum der Arbeitskammer 2, und der Aufnahmeboden 7 wird mit Hilfe des pneumatischen Zylinders 6 nach unten geführt und nimmt seine Ausgangsstellung ein. Nach dem Herausnehmen des behandelten Werkstücks 10[1] aus dem Raum der Kammer 2 und dem Aufstellen des nächsten Werkstücks 10 auf dem Tisch 9 wiederholt sich der Betriebszyklus.

Beim Betrieb der in Fig. 4, 5 abgebildeten Variante der Vorrichtung wird der Druck der Luft im pneumatischen Zylinder 6 so ausgewählt, daß der hermetische Verschluß der Kammer 13 in der Zeit, während der sie mit einem Brennstoffgemisch gefüllt wird, bei den Anfangskennwerten gewährleistet wird. In der Brennperiode des Gemisches, die Hundertstel Se-

- 7 -

kunden dauert, wird der hermetische Verschluß des Raums
der Kammer 13 und des Aufnahmebodens 7 durch die zusammengesetzten Metallringe 14, 19 gewährleistet, so daß die Gase
mit hohem Druck und hoher Temperatur nicht unmittelbar auf
den elastischen Dichtungsring 11 einwirken können.

Die erfindungsgemäße Vorrichtung ist nach einem in
sich geschlossenen Kräfteschema ausgeführt, d.h. sie benötigt keinerlei zusätzliche Mechanismen zum Fixieren des
Aufnahmebodens 7 an der Kammer 13 (2) sowohl in der Periode,
während der sie mit einem Brennstoffgemisch gefüllt wird,
als auch in der Brennperiode des Gemisches, d.h. wenn in
der Kammer 13 (2) der maximale Druck herrscht. Der Druck des
Brennstoffgemisches sowohl bei den Anfangskennwerten während
des Füllens der Kammer, als auch bei den maximalen Kennwerten während des Brennprozesses wird von den Stirnwänden des
Hohlzylinders und seiner Seitenfläche und auch von der Seitenfläche der Arbeitskammer 13 (2) (durch die Fenster 8) aufgenommen, d.h. die im Innern des Hohlzylinders und der Arbeitskammer 13 (2) entstehenden Kräfte werden in ihren Wänden gelöscht und nicht auf den pneumatischen Zylinder 6 und
den Rahmen 1 übertragen.

Das Anbringen einer zusätzlichen Dichtung 12 (Fig. 1, 2)
im Innern der Arbeitskammer 2 verhindert einen Austritt des
Brennstoffgemisches durch die Fenster 8 in der Seitenwand
des Hohlzylinders.

Durch das Anbringen metallischer Dichtungsringe 14, 19
(Fig. 4, 5) am Hohlzylinder wird eine direkte Einwirkung
der hohen Temperatur der Verbrennungsprodukte auf den elastischen Dichtungsring 11 vermieden, der die Kammer 13 in
der Periode des Füllens mit einem gasförmigen Brennstoffgemisch hermetisch verschließt. Das Anbringen eines in axialer Richtung beweglichen Sicherungsringes 16 mit einem
Bördelrand 17 im unteren Teil der Kammer 13 verhindert ein
Öffnen der zusammengesetzten Metallringe 14 beim Senken und
Heben des Aufnahmebodens 7, was einen zuverlässigen Betrieb
der Vorrichtung gewährleistet.

## Industrielle Anwendbarkeit

Die Erfindung kann in Maschinenbaubetrieben zum Putzen
von Werkstücken aus Metall und Plast verwendet werden.

– 8 –

PATENTANSPRÜCHE

1. Vorrichtung zum thermischen Entgraten von Werkstükken, die eine zylindrische Arbeitskammer (2) mit einem Einlaß- und einem Auslaßventil (3, 5) und einer Zündkerze (4), einen Aufnahmeboden (7) zum Schließen und Öffnen der Kammer (2), der mit einem Tisch (9) zum Aufstellen der zu behandelnden Werkstücke (10) ausgerüstet und bewegbar entlang der Achse der Kammer (2) angeordnet ist, und einen elastischen Dichtungsring (11) zur hermetischen Abdichtung der Verbindung des Aufnahmebodens (7) mit der Kammer (2) enthält, dadurch gekennzeichnet, daß der Aufnahmeboden (7) in Form eines Hohlzylinders mit Deckeln an den Stirnflächen und Fenstern (8) in der Seitenwand ausgebildet ist, dessen Höhe und Außendurchmesser etwa der Höhe und dem Innendurchmesser der Arbeitskammer (2) gleicht, und die Vorrichtung mit einem zusätzlichen Dichtungsring (12) versehen ist, der sich zwischen der Kammer (2) und dem Hohlzylinder auf der der Beschickungsöffnung der Kammer (2) gegenüberliegenden Seite befindet.

2. Vorrichtung nach Anspruch 1, dadurch gekennzeichnet, daß sie wenigstens mit einem zusammengesetzten metallischen Dichtungsring (14) der zwischen der Kammer (13) und dem Hohlzylinder auf der Seite der Beschickungsöffnung der Kammer (13) hinter dem elastischen Dichtungsrung (11) in Richtung vom Rand der Kammer (13) weg zur Mitte hin entlang ihrer Achse liegt, und einem Sicherungsring (16) für den erwähnten offenen Ring (14) versehen ist, der auf der Oberfläche des Hohlzylinders bei der Bewegung des letzteren gleiten kann, wobei als zusätzlicher Dichtungsring ebenfalls wenigstens ein zusammengesetzten Metallring (19) verwendet wird.

FIG.3

FIG.1

FIG.2

FIG.4

FIG.5

# INTERNATIONAL SEARCH REPORT

International Application No PCT/SU 86/00038

**I. CLASSIFICATION OF SUBJECT MATTER** (if several classification symbols apply, Indicate all) [6]

According to International Patent Classification (IPC) or to both National Classification and IPC

IPC[4] B 23 K 7/06

**II. FIELDS SEARCHED**

| Minimum Documentation Searched [7] | |
|---|---|
| Classification System | Classification Symbols |
| IPC[4] | B 23 K 7/00, 7/06, 28/00 |

Documentation Searched other than Minimum Documentation
to the Extent that such Documents are included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | US, A, 3666252, (Chemotronics, Incorporated), 30 May 1972 (30.05.72), see the abstract | 1,2 |
| A | DE, A1, 3204995, (Robert Bosch GmbH), 25 August 1983 (25.08.83), see the abstract | 1,2 |
| A | DE, A1, 3204997, (Robert Bosch GmbH), 25 August 1983 (25.08.83), see the abstract | 1,2 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art.
"&" document member of the same patent family

**IV. CERTIFICATION**

| Date of the Actual Completion of the International Search | Date of Mailing of this International Search Report |
|---|---|
| 30 October 1986 (30.10.86) | 12 January 1987 (12.01.87) |
| International Searching Authority | Signature of Authorized Officer |
| ISA/SU | |

Form PCT/ISA/210 (second sheet) (January 1985)